# EUROPEAN PATENT APPLICATION

(11) **EP 4 640 561 A1**
(43) Date of publication of application: **29.10.2025**
(21) Application number: 23909406.3
(22) Date of filing: 26.09.2023
(51) Int. Cl.: B64D 27/24

(54) **AIRCRAFT AND POWER DEVICE THEREOF**

(30) Priority: 25.12.2022 CN 202223463773 U; 28.07.2023 CN 202310937259
(71) Applicant: Autoflight (Kunshan) Co., Ltd., Suzhou, Jiangsu 215345 (CN)
(72) Inventor: TIAN, Yu, Suzhou, Jiangsu 215345 (CN); XI, Jinping, Suzhou, Jiangsu 215345 (CN)
(74) Representative: MERH-IP Matias Erny Reichl Hoffmann Patentanwälte PartG mbB
(86) International application number: PCT/CN2023/121422
(87) International publication number: WO 2024/139471

(57) **Abstract**

The present invention relates to the technical field of aircraft, and discloses an aircraft and its power unit. The aircraft power unit of the present invention includes a motor module, an ESC module, and a plurality of fixing connection rods. The motor module includes a plurality of terminal posts, and the ESC module includes a plurality of ESC sockets corresponding to the terminal posts. One end of each fixing connection rod passes through the ESC module to serially connect the motor module and the ESC module, so that the terminal posts are connected to the corresponding ESC sockets, and the other end of each fixing connection rod is connected to the aircraft body. The aircraft power unit of the present invention modularizes the production and assembly of the motor and ESC, reducing costs.

## Description

### FIELD OF THE DISCLOSURE

The present invention relates to the technical field of aircraft, in particular to an aircraft and a power unit thereof.

### BACKGROUND OF THE INVENTION

In aircraft, to reduce takeoff weight and minimize aerodynamic drag during flight, the installation space for the power system is very limited, especially for vertical takeoff and landing aircraft, which require larger power units. Considering the overall structural integrity of the aircraft, it is necessary to design a highly integrated power unit that fits the installation space of the aircraft.

### SUMMARY OF THE INVENTION

The purpose of the present invention is to provide an aircraft and a power unit thereof. The power unit of the present invention modularizes the production and assembly of the motor and of the electronic speed controller (ESC), reducing costs.

To solve the above technical problems, the present invention provides an aircraft power unit, comprising: a motor module, an ESC module, and a plurality of fixing connection rods. The motor module includes a plurality of terminal posts, and the ESC module includes a plurality of ESC sockets corresponding to the plurality of terminal posts. One end of each fixing connection rod penetrates the ESC module to serially connect the motor module and the ESC module, so that the terminal posts are connected to the corresponding ESC sockets, and the other end of each fixing connection rod is connectable to the body of the aircraft;

The present invention further provides an aircraft, comprising the aforementioned aircraft power unit, wherein the aircraft power unit is connected to the body of the aircraft through the fixing connection rods.

Preferably, the fixing connection rod comprises a threaded portion, a rod portion, and a bearing portion connected in sequence. The threaded portion is to be threadedly connected to the motor module, the rod portion is to be inserted into the ESC module, and the bearing portion is to abut against the ESC module.

Preferably, the bearing portion of the fixing connection rod is provided with an internal thread, and the bearing portion is to be connected to the body of the aircraft through the internal thread.

Preferably, the ESC module comprises a plurality of module through holes matching the plurality of fixing connection rods, and each fixing connection rod passes through the corresponding module through hole to penetrate the ESC module.

Preferably, the motor module comprises a plurality of mounting brackets, the mounting brackets are provided with mounting holes matching the plurality of fixing connection rods, and the fixing connection rods pass through the module through holes of the ESC module and are threadedly connected to the mounting holes through the threaded portions.

Preferably, a buffer gasket is provided on a surface of the module through hole facing the motor module.

Preferably, the terminal posts are spaced apart and arranged in a ring on a side of the motor module facing the ESC module.

Preferably, the ESC module comprises an ESC device and a heat dissipation device. An axial cross-section of the ESC device is a regular hexagon, and an axial cross-section of the heat dissipation device is circular and surrounds the ESC device.

Preferably, the axial cross-sections of the motor module and of the ESC module are both circular and have the same diameter.

The aircraft power unit of the present invention uses fixing connection rods to pass through the ESC module, serially connecting the motor module and the ESC module and connecting the power unit to the aircraft body, modularizing the production and assembly of the motor and ESC, reducing costs.

### BRIEF DESCRIPTION OF DRAWINGS

FIG. 1 is a structural diagram of the aircraft power unit according to an embodiment of the present invention;
FIG. 2 is an exploded view of the aircraft power unit according to an embodiment of the present invention;
FIG. 3 is a structural diagram of the motor module of the aircraft power unit according to an embodiment of the present invention;
FIG. 4 is a structural diagram of the ESC module of the aircraft power unit according to an embodiment of the present invention;
FIG. 5 is a structural diagram of the fixing connection rod of the aircraft power unit according to an embodiment of the present invention.

### DETAILED DESCRIPTION

The technical solutions of the invention will be clearly and completely described below in conjunction with the accompanying drawings. Apparently, the described embodiments are part of the embodiments of the invention, but not all of them. Based on the embodiments of the present invention, all other embodiments obtained by persons of ordinary skill in the art without making creative efforts belong to the scope of protection of the present invention.

Unless the context requires otherwise, throughout the specification and claims, the word "comprise" and variations such as "include" and "have" should be construed in an open, inclusive sense, i.e. should be interpreted as "including, but not limited to".

The following will be combined with the accompanying drawings to describe the various embodiments of the present invention in detail, so as to more clearly understand the purpose, characteristics and advantages of the present invention. It should be understood that the embodiments shown in the accompanying drawings are not intended to limit the scope of the present invention, but are only intended to illustrate the essential spirit of the technical solution of the present invention.

References throughout the specification to "one embodiment" or "an embodiment" mean that a particular feature, structure, or characteristic described in connection with the embodiment is included in at least one embodiment. Thus, the appearance of "in one embodiment" or "in an embodiment" in various places throughout the specification are not necessarily all referring to the same embodiment. In addition, the particular features, structures, or characteristics may be combined in any manner in one or more embodiments.

As used in this specification and the appended claims, the singular forms "a", "an", and "the" include plural referents unless the context clearly dictates otherwise. It should be noted that the term "or" is generally employed in its sense including "and/or" unless the context clearly dictates otherwise.

In the following description, in order to clearly demonstrate the structure and working mode of the utility model, many directional words will be used for description, but the words "front", "back", "left", "right", "outside", "inside", "outward", "inward", "up", "down", etc. should be understood as convenient terms and should not be understood as restrictive terms.

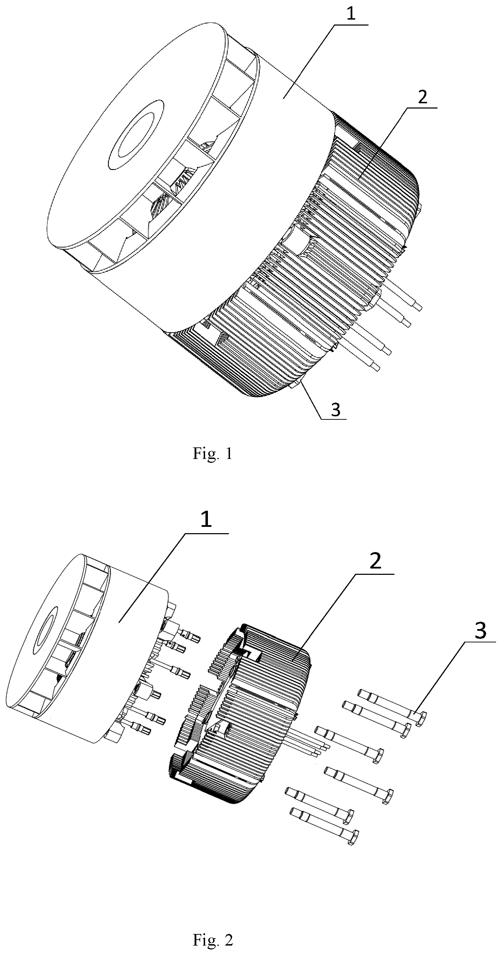

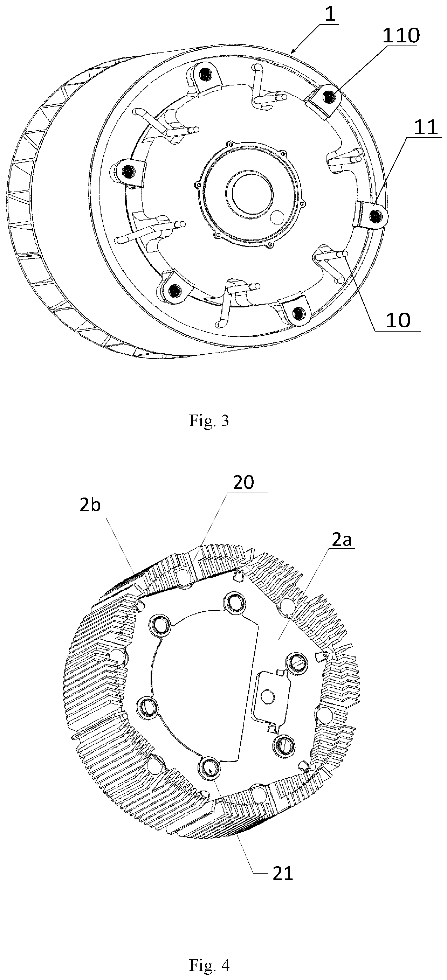

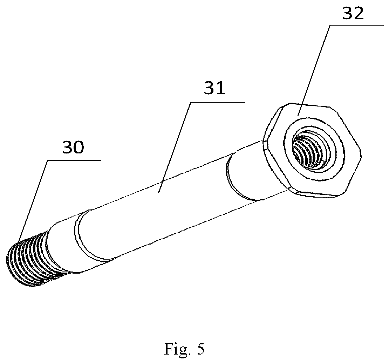

The first embodiment of the present invention is described below with reference to the accompanying drawings. As shown in Figures 1 to 4, the aircraft power unit of this embodiment includes: a motor module 1, an ESC module 2, and a plurality of fixing connection rods 3. The ESC module 2 includes a plurality of module through holes 20 matching the fixing connection rods 3, and each fixing connection rod 3 passes through the corresponding module through hole 20 to connect the motor module 1 and the ESC module 2. The motor module 1 includes a plurality of terminal posts 10, and the ESC module 2 includes a plurality of ESC sockets 21 corresponding to the terminal posts 10. The fixing connection rods 3 penetrate the ESC module 2 to serially connect the motor module 1 and the ESC module 2, ensuring each terminal post 10 is inserted into the corresponding ESC socket 21 to establish an electrical connection between the motor module 1 and the ESC module 2. Additionally, the other end of each fixing connection rod 3 is connected to the body of the aircraft (not shown), thereby securing the power unit to the aircraft. Specifically, as shown in Figure 3, the motor module 1 includes a plurality of mounting brackets 11, the mounting brackets 11 are provided with mounting holes 110 matching the fixing connection rods 3. In this embodiment, the mounting brackets 11 are installed on the motor bearing sleeve, though other locations are also possible. As shown in Figure 5, the fixing connection rod 3 comprises a threaded portion 30, a rod portion 31, and a bearing portion 32 connected in sequence. The threaded portion 30 is inserted into the mounting hole 110 and threadedly connected to the mounting bracket 11 of the motor module 1. The rod portion 31 is inserted into the ESC module 2, and the bearing portion 32 abuts against the ESC module 2. Further, the bearing portions 32 of the fixing connection rods 3 are provided with internal threads, and bolts are inserted into the internal threads to connect the power unit to the body of the aircraft (not shown). Further, the terminal posts 10 and ESC sockets 21 are spaced apart and arranged in a ring on the side of the motor module 1 facing the ESC module 2. In this embodiment, they are arranged at the six vertices of a regular hexagon. The aircraft power unit of the present invention modularizes the production and assembly of the motor and ESC using fixing connection rods, facilitating easy assembly, maintenance, and replacement while reducing costs.

Further, a buffer gasket is provided on the surface of the module through hole 20 facing the motor module 1 to cushion and protect the contact surfaces between the motor module 1 and the ESC module 2.

Further, the ESC module 2 comprises an ESC device 2a and a heat dissipation device 2b. The axial cross-section of the ESC device 2a is a regular hexagon, facilitating the arrangement of IGBT power devices along its edges. The axial cross-section of the heat dissipation device 2b is circular and surrounds the ESC device 2a, dissipating heat from the IGBT power devices. The axial cross-sections of the motor module 1 and the ESC module 2 are both circular and have the same diameter, making it easier to install them in the aircraft.

The second embodiment of the present invention provides an aircraft, comprising the aforementioned power unit, wherein the aircraft body is connected with the power unit. The aircraft power unit of the present invention uses fixing connection rods to pass through the ESC module, serially connecting the motor module and the ESC module and connecting the power unit to the body of the aircraft, modularizing the production and assembly of the motor and ESC, reducing costs.

The above embodiments are merely illustrative of the principles of the present invention and its effects, which is not intended to limit the invention. Any person skilled in the art can modify or alter the above embodiments without departing from the purpose and the scope of the present invention. Accordingly, all equivalent modifications or alterations made by persons having ordinary knowledge in the art, without departing from the purpose and technical ideas disclosed in the present invention, shall still be covered by the claims of the present invention.

## Claims

1. An aircraft power unit, comprising: a motor module (1), an ESC module (2) and a plurality of fixing connection rods (3); the motor module (1) comprises a plurality of terminal posts (10), the ESC module (2) comprises a plurality of ESC sockets (21) corresponding to the plurality of terminal posts (10), one end of each of the fixing connection rods (3) penetrates the ESC module (2) to serially connect the motor module (1) and the ESC module (2) and connect the terminal posts (10) to the corresponding ESC sockets (21), and the other end of each of the fixing connection rods (3) is connectable to a body of an aircraft.

2. The aircraft power unit according to claim 1, wherein the fixing connection rod (3) comprises a threaded portion (30), a rod portion (31), and a bearing portion (32) connected in sequence; the threaded portion (30) is to be threadedly connected to the motor module (1), the rod portion (31) is to be inserted into the ESC module (2), and the bearing portion (32) is to abut against the ESC module (2).

3. The aircraft power unit according to claim 2, wherein the bearing portion (32) of the fixing connection rod (3) is provided with an internal thread, and the bearing portion (32) is to be connected to the body of the aircraft through the internal thread.

4. The aircraft power unit according to claim 2, wherein the ESC module (2) comprises a plurality of module through holes (20) matching the plurality of fixing connection rods (3), and each fixing connection rod (3) passes through the corresponding module through hole (20) to penetrate the ESC module (2).

5. The aircraft power unit according to claim 4, wherein the motor module (1) comprises a plurality of mounting brackets (11), the mounting brackets (11) are provided with mounting holes (110) matching the plurality of fixing connection rods (3), and the fixing connection rods (3) pass through the module through holes (20) of the ESC module (2) and are threadedly connected to the mounting holes (110) through the threaded portions (30).

6. The aircraft power unit according to claim 5, wherein a buffer gasket is provided on a surface of the module through hole (20) facing the motor module (1).

7. The aircraft power unit according to claim 6, wherein the terminal posts (10) are spaced apart and arranged in a ring on a side of the motor module (1) facing the ESC module (2).

8. The aircraft power unit according to claim 1, wherein the ESC module (2) comprises an ESC device (2a) and a heat dissipation device (2b); an axial cross-section of the ESC device (2a) is a regular hexagon, and an axial cross-section of the heat dissipation device (2b) is circular and surrounds the ESC device (2a).

9. The aircraft power unit according to claim 4, wherein axial cross-sections of the motor module (1) and of the ESC module (2) are both circular and have the same diameter.

10. An aircraft, comprising the aircraft power unit according to any one of claims 1 to 9, wherein the aircraft power unit is connected to the body of the aircraft through the fixing connection rods (3).
